# EUROPEAN PATENT SPECIFICATION

(11) **EP 1 385 596 B1**
(45) Date of publication and mention of the grant of the patent: **02.02.2005**
(21) Application number: 02720235.7
(22) Date of filing: 18.04.2002
(51) Int. Cl.: B01D 29/03, B01D 29/64

(54) **SCREEN APPARATUS**
SIEBEINRICHTUNG
APPAREIL DE CRIBLAGE

(30) Priority: 23.04.2001 GB 0109812
(43) Date of publication of application: 04.02.2004
(73) Proprietor: CSO Technik Limited, Edenbridge, Kent TN8 6HF (GB)
(72) Inventor: FROUD, Colin, Knockholt, Kent TN14 7EW (GB)
(74) Representative: Crouch, David John
(86) International application number: PCT/GB2002/001791
(87) International publication number: WO 2002/085488

(56) References cited:
- DE-A- 19 820 259
- GB-A- 804 163
- US-A- 3 794 179
- US-A- 4 352 734
- US-A- 4 358 383
- US-A- 5 770 057

## Description

The present invention relates to a sewage storm overflow installation comprising a channel along which sewage flows when the apparatus is in use, a weir at one side of the channel over which weir sewage tips during storm conditions, and a screen, which is curved in cross-section, extending along the weir in the direction of flow defined by the channel, so that sewage which tips over the weir flows through the screen.

Such a type of sewage storm overflow installation is described in DE 641863.

In another previously proposed construction the screen comprises a multiplicity of bars which are parallel to one another and which are spaced from one another across the screen. One problem encountered with this prior construction is that non-fluid matter, for example debris, can be trapped against the bars as fluid flows between them, so that after a prolonged period the non-fluid matter can build up and inhibit the free-flow of fluid through the screen.

The present invention seeks to provide a remedy.

Accordingly the present invention is directed to a sewage storm overflow installation having the construction as set out in the opening paragraph of the present specification, in which the installation comprises a jet outlet arranged to direct a jet of fluid through the interior of the screen across that side of the screen on which matter would otherwise tend to collect during storm conditions when sewage tips over the weir, along the screen in the said direction.

The jet of fluid prevents the screen from clogging up, or at least increases the time it takes to be clogged up. This in turn reduces the load on the screen, being the total force exerted by fluid on the screen.

In the event that non-fluid matter, such as for example a disposed hypodermic syringe, approaches the screen during storm conditions it will either be swept away by the jet of fluid before it contacts the screen, or, should it reach the screen, it will be rolled over by the jet of fluid across the screen until it is cleared therefrom.

A particularly inexpensive embodiment of the present invention uses water as the fluid of the jet. In a preferred construction, therefore, the jet outlet is connected to receive water from a source thereof.

Advantageously the source of water comprises a tank of water. This can be filled with water in a very convenient manner by being an open tank placed below the screen to catch the fluid flowing therethrough. Suitable passageways and a pump may be provided to transfer fluid from the tank to the jet outlet under pressure.

An air injector may be connected to inject air into the water so that the jet of fluid comprises a mix of water and air. This provides the advantage of increased turbulence to improve the scouring action of the jet of fluid to clear non-fluid matter from the screen, and helps to float the screenings. At the same time it improves the biological breakdown of the sewage in the event that the screen apparatus constitutes sewage storm overflow apparatus. This aids the cleaning process.

The screen may be recessed from the inside surface of the weir which faces the channel. This affords the advantage that the jet of fluid can be at least partly contained within the screen. It is then preferable for a deflector to be arranged in the screen at a position downstream of the jet outlet to deflect the fluid of the jet into the mainstream of the fluid flowing along the channel. The screen may be curved so that it has a generally semi-circular cross-section open on a diameter thereof. One readily obtainable material for the screen is sheet, for example, metal sheet, uniformly perforated, for example with 6mm diameter holes.

The deflector may be an integral part of the screen, or it may be a separate component which is secured to the screen. Either way, it is desirable for the deflector to be impervious to fluid to reduce the likelihood that non-fluid matter will be pressed and held against it by the jet of fluid.

The deflector may be constructed as a venturi, to improve the flow of the jet.

An example of a sewage storm overflow installation embodying the present invention will now be described with reference to the accompanying drawings, in which: -
- Figure 1: shows a cross-sectional elevational view of the installation;
- Figure 2: shows a side-elevational view of the installation shown in Figure 1;
- Figure 3: shows a plan view of parts of the installation shown in Figure 1;
- Figures 4 to 7: show respective cross-sectional views of parts of modifications to the installation shown in Figures 1 to 3.

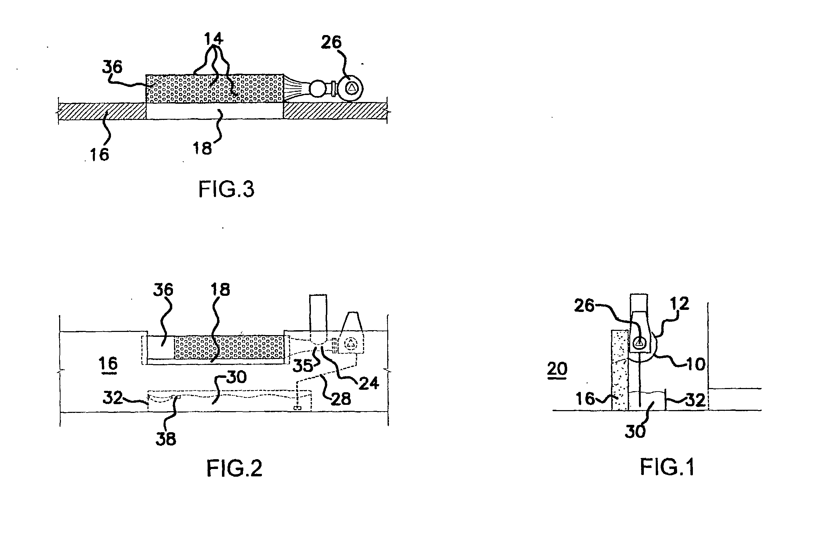

Figures 1 to 3 show a sewage storm overflow installation comprising a screen 10 in the form of a metal sheet 12 perforated uniformly over its area with 6 mm diameter holes 14. The ratio of open area created by these holes across the sheet to solid area is about 1:1. The screen allows fluid to pass through it whilst providing a barrier to non-fluid matter such as debris in the sewage. The sheet 12 is curved so that it has a generally semi-circular cross-section as shown in Figure 1, the diameter across the semi-circle being entirely open. The screen could then be said to constitute a basket. At the same time, the sheet 12 as curved in this fashion is generally elongate with a lower edge secured to an upright wall 16 which constitutes a weir. The said diameter slants at an angle of about 30 degrees to the wall 16.

The wall 16 has a cut-away 18 along its top edge, so that the top edge of the wall 16 is at a lower level in this cut-away region than it is elsewhere. It will be appreciated that the wall is built in this way, and that it is not to be inferred from the words "cut-away" that anything has been removed. The lower edge of the screen 10 is secured to the wall 16 along the upper edge and to one side thereof at the cut-away region 18. The other side of the wall 16 defines one side of a channel 20 along which sewage waste flows.

A jet outlet 22 is secured to one end of the screen 10. The jet outlet 22 is provided with a venturi 24 upstream thereof. A pump 26 is connected via a passageway 28 to receive water 30 from a tank 32 positioned below the screen 10, and to pump that water through the venturi 24 and out through the jet outlet 22. The jet outlet 22 is arranged to direct a jet of water through the interior of the screen 10.

The venturi 24 is provided with an inlet 34 to draw air therethrough into the water passing through the venturi 24 so that air is mixed with the water in a mixing compartment 35 before it exits the jet outlet 22 to constitute the jet of fluid.

The other end of the screen 10 is provided with a deflector 36 which, as is most evident from Figure 3, is curved to deflect the jet of fluid at that end of the screen 10 into the main flow of the fluid waste in the channel 20.

A float switch 38 is provided in the tank 32, and is electrically connected by circuitry (not shown) to trigger operation of the pump 26.

In normal conditions sewage waste flows through the channel 20 on its way to a treatment plant, for example. In the event of storm conditions, the level of the waste water rises until it starts to tip over the top edge of the wall 16 at the cut-away portion 18. The water is freely able pass through the holes 14 and falls into the tank 32.

If the storm conditions are sufficiently bad, the tank 32 will fill with water 30 and eventually trigger the float switch 38. This operates the pump 26, drawing water from the tank 32, which water is then pumped through the venturi 24, drawing air in through the inlet 34 and forming a jet of water/air mix, or wash water, to issue as a jet stream from the jet outlet 22. The jet stream flows along the inside of the screen 10 and is deflected by the deflector plate 36 back into the main flow of the waste sewage in the channel 20.

Any non-fluid matter in the sewage fluid which approaches the screen 10 is thrust along the screen 10 by the jet stream from the jet outlet 22 and is then deflected by the deflector plate 36 back into the main flow of the waste sewage in the channel 20. It is thereby prevented from clogging the holes 14 of the screen 10. In the event that non-fluid matter should reach the screen 10 it will be rolled therealong by the jet stream to the deflector plate 36 where it will be urged out into the main flow.

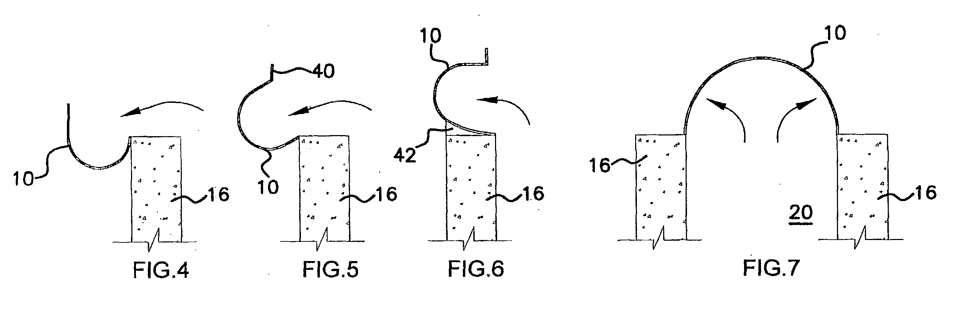

A number of variations to the construction in the Figures 1 to 3 are shown respectively in Figures 4 to 7. Thus in Figure 4 the median bisector of the U defined by the semi-circular cross-section of the screen 10 is generally parallel to the wall 16, with the base of the U lowermost. Furthermore, that side of the screen 10 which is further from the wall 16 is extended to a level significantly higher than the top of the wall 16 at the cut-out 18.

In Figure 5, the edge of the screen 10 further from the wall 16 is extended by a generally upright lip 40.

In the modification shown in Figure 6, the said bisector is generally horizontal, and a portion of the screen 10 close to the base of the U rests on a support plate 42.

In the modification shown in Figure 7 the U of the screen's cross-section is entirely inverted with opposite ends of the U supported respectively on two weirs 16 spaced apart from one another with the channel 20 defined therebetween.

Numerous variations and modifications to the illustrated constructions may occur to the reader without taking the resulting construction outside the scope of the present invention. For example, the deflector plate 36, could be made as an integral part of the screen 10 instead of as an insert therefor. It would, however, in that case be necessary for the holes 14 to be absent from the deflector plate region of the screen, or else those holes 14 should be filled in in that region. Unfiltered water could be used for the jet of fluid, and a standard pump could be used without air injected. The perforated screen cross-section could be continuously reduced from the pump end to the deflector plate end to improve its self-cleaning function.

## Claims

1. A sewage storm overflow installation comprising a channel (20) along which sewage flows when the apparatus is in use, a weir (16) at one side of the channel (20) over which weir (16) sewage tips during storm conditions, and a screen (10), which is curved in cross-section, extending along the weir (16) in the direction of flow defined by the channel (20), so that sewage which tips over the weir (16) flows through the screen (10) **characterised in that** the installation comprises a jet outlet (22) arranged to direct a jet of fluid through the interior of the screen (10) across that side of the screen (10) on which matter would otherwise tend to collect during storm conditions when sewage tips over the weir (16), along the screen (10) in the said direction.

2. An installation according to claim 1, **characterised in that** the jet outlet (22) is connected to a source (32) of water to enable it to direct a jet of water across the screen (10).

3. An installation according to claim 2, **characterised in that** the source of water comprises a tank (32) of water.

4. An installation according to claim 3, **characterised in that** the tank (32) of water is an open tank (32) placed below the screen (10) to catch the fluid flowing therethrough.

5. An installation according to claim 4, **characterised in that** the apparatus is further provided with a pump (26) to transfer fluid from the tank (32) to the jet outlet (22).

6. An installation according to any preceding claim, **characterised in that** an air inlet (34) is connected so that the jet of fluid comprises a mix of water and air.

7. An installation according to any preceding claim, **characterised in that** the screen (10) is recessed from the inside surface of the weir (16) which faces the channel (20).

8. An installation according to any preceding claim, **characterised in that** a deflector (36) is arranged in the screen (10) at a position downstream of the jet outlet (22) to deflect the fluid of the jet into the mainstream of the fluid flowing along the channel (20).

9. An installation according to any preceding claim, **characterised in that** the deflector (36) is impervious to fluid to reduce the likelihood that non-fluid matter will be pressed and held against it by the jet of fluid.

10. An installation according to any preceding claim, **characterised in that** the deflector (36) is constructed as a venturi, to improve the flow of the jet.

11. An installation according to any preceding claim, **characterised in that** the screen (10) comprises a sheet (12).

12. An installation according to claim 11, **characterised in that** the sheet (12) is a metal sheet (12).

13. An installation according to claim 11 or claim 12, **characterised in that** the sheet (12) is uniformly perforated.

14. An installation according to claim 13, **characterised in that** the sheet (12) is uniformly perforated with substantially 6mm diameter holes.

## Patentansprüche

1. Eine Überlaufanlage für unwetterbedingte überschüssige Abwassermengen mit einem Abwasserkanal (20), der an einer Seite mit einem Überlauf (16) für die unwetterbedingten Abwasserüberschussmengen versehen ist, mit einem einen gekrümmten Querschnitt aufweisenden Sieb (10), das sich in der durch den Abwasserkanal (20) definierten Strömungsrichtung längs des Überlaufes (16) erstreckt und durch das die den Überlauf (16) passierende, überschüssige Abwassermenge fließt, **dadurch gekennzeichnet, dass** die Anlage mit einer Strahldüse (22) ausgestattet ist, mittels derer ein Fluid-Strahl über die Innenfläche des Siebes (10) geleitet wird, auf der sich sonst während eines Unwetters Schmutzstoffe aus der den Überlauf passierenden überschüssigen Schmutzwassermenge absetzen würden.

2. Anlage nach Anspruch 1, **dadurch gekennzeichnet, dass** die Strahldüse (22) mit einer Wasserversorgung verbunden ist, um einen Wasserstrahl über das Sieb (10) leiten zu können.

3. Anlage nach Anspruch 2, **dadurch gekennzeichnet, dass** zur Wasserversorgung ein Wassertank (32) gehört.

4. Anlage nach Anspruch 3, **dadurch gekennzeichnet, dass** der Wassertank (32) als unterhalb des Siebes (10) angeordneter offener Tank zur Aufnahme des das Sieb (10) passierenden Wassers ausgebildet ist.

5. Anlage nach Anspruch 4, **dadurch gekennzeichnet, dass** das Wasser durch eine Pumpe (26) vom Tank (32) zur Strahldüse (22) förderbar ist.

6. Anlage nach einem der Ansprüche 1 bis 5, **dadurch gekennzeichnet, dass** sie mit einem Lufteinlass (34) versehen ist, über den dem Flüssigkeitsstrahl Luft beimischbar ist.

7. Anlage nach einem der Ansprüche 1 bis 6, **dadurch gekennzeichnet, dass** das Sieb (10) gegenüber der zum Kanal (20) gerichteten Innenseite des Überlaufes (16) versetzt angeordnet ist.

8. Anlage nach einem der Ansprüche 1 bis 7, **dadurch gekennzeichnet, dass** das Sieb (10) stromabwärts von der Strahldüse (22) mit einem den Flüssigkeitsstrahl in den im Kanal (20) fließenden Hauptstrom leitenden Ablenker (36) versehen ist.

9. Anlage nach einem der Ansprüche 1 bis 8, **dadurch gekennzeichnet, dass** der Ablenker (36) undurchlässig ist, um die Wahrscheinlichkeit zu reduzieren, dass sich an ihm unter der Einwirkung des Flüssigkeitsstrahles Schmutzstoffe festsetzen.

10. Anlage nach einem der Ansprüche 1 bis 9, **dadurch gekennzeichnet, dass** der Ablenker (36) zur Verbesserung der Strahlwirkung venturiförmig ausgebildet ist.

11. Anlage nach einem der Ansprüche 1 bis 10, **dadurch gekennzeichnet, dass** das Sieb (10) aus einem flachen Material besteht.

12. Anlage nach Anspruch 11, **dadurch gekennzeichnet, dass** es sich bei dem flachen Material um ein Metallblech (12) handelt.

13. Anlage nach Anspruch 11 oder 12, **dadurch gekennzeichnet, dass** das Siebmaterial (12) gleichmäßig perforiert ist.

14. Anlage nach Anspruch 13, **dadurch gekennzeichnet, dass** die Perforierung von Löchern mit einem Durchmesser gebildet wird, der im Wesentlichen 6 mm beträgt.

## Revendications

1. Une installation de surverse d'eaux usées en cas d'orage, comprenant un canal (20) le long duquel des eaux usées s'écoulent lorsque le dispositif est en utilisation, un barrage déversoir (16) sur un côté du canal (20), barrage déversoir (16) sur lequel les eaux usées battent dans des conditions d'orage, et un écran de filtre (10) à section transversale incurvée, s'étendant le long du barrage déversoir (16) dans la direction d'écoulement définie par le canal (20), de manière que les eaux usées battant sur le barrage déversoir (16) s'écoulent en traversant l'écran de filtre (10), **caractérisée en ce que** l'installation comprend une sortie de jet (22), agencée pour diriger un jet de fluide à l'intérieur de l'écran de filtre (10), sur la face de l'écran de filtre (10) sur laquelle autrement des matières tendraient à se collecter dans des conditions d'orage lorsque les eaux usées battent sur le barrage déversoir (16), le long de l'écran de filtre (10) dans ladite direction.

2. Une installation selon la revendication 1, **caractérisée en ce que** la sortie de jet (22) est connectée à une source d'eau (32), pour lui permettre de diriger un jet d'eau sur l'écran de filtre (10).

3. Une installation selon la revendication 2, **caractérisée en ce que** la source d'eau comprend un réservoir (32) rempli d'eau.

4. Une installation selon la revendication 3, **caractérisée en ce que** le réservoir (32) rempli d'eau est un réservoir ouvert (32) placé au-dessous de l'écran (10), pour capter le fluide s'écoulant à travers lui.

5. Une installation selon la revendication 4, **caractérisée en ce que** le dispositif est en outre muni d'une pompe (26), pour transférer du fluide du réservoir (32) à la sortie de jet (22).

6. Une installation selon l'une quelconque des revendications précédentes, **caractérisée en ce qu'**une entrée d'air (34) est reliée, de manière que le jet de fluide forme un mélange d'eau et d'air.

7. Une installation selon l'une quelconque des revendications précédentes, **caractérisée en ce que** l'écran de filtre (10) est concave, la concavité étant tournée vers la surface intérieure du barrage déversoir (16) tournée vers le canal (20).

8. Une installation selon l'une quelconque des revendications précédentes, **caractérisée en ce qu'**un déflecteur (36) est agencé dans l'écran de filtre (10), en une position en aval de la sortie de jet (22), pour dévier le fluide du jet dans le flux principal du fluide s'écoulant dans le canal (20).

9. Une installation selon l'une quelconque des revendications précédentes, **caractérisée en ce que** le déflecteur (36) est imperméable aux fluides, afin de réduire le risque que des matières non fluides soient pressées et maintenues contre lui par le jet de fluide.

10. Une installation selon l'une quelconque des revendications précédentes, **caractérisée en ce que** le déflecteur (36) est construit sous forme de venturi, pour améliorer l'écoulement du jet.

11. Une installation selon l'une quelconque des revendications précédentes, **caractérisée en ce que** l'écran (10) comprend une feuille (12).

12. Une installation selon la revendication 11, **caractérisée en ce que** la feuille (12) est une feuille ou tôle métallique (12).

13. Une installation selon la revendication 11 ou la revendication 12, **caractérisée en ce que** la feuille (12) est munie d'une perforation uniforme.

14. Une installation selon la revendication 13, **caractérisée en ce que** la feuille (12) est perforée de façon uniforme, avec des trous d'un diamètre de sensiblement 6 mm.
